# EUROPEAN PATENT APPLICATION

(11) **EP 4 818 566 A1**
(43) Date of publication of application: **07.10.2026**
(21) Application number: 24897510.4
(22) Date of filing: 26.11.2024
(51) Int. Cl.: F16L 59/16, F16L 9/18, F16L 59/06

(54) **DOUBLE PIPE FOR TRANSFERRING LOW-TEMPERATURE FLUID**

(30) Priority: 30.11.2023 JP 2023203306
(71) Applicant: KAWASAKI JUKOGYO KABUSHIKI KAISHA, Kobe-shi, Hyogo 650-8670 (JP)
(72) Inventor: NAKASHIMA, Kentaro, Kobe-shi, Hyogo 650-8670 (JP); TAKEUCHI, Nobuyoshi, Kobe-shi, Hyogo 650-8670 (JP); KIMOTO, Kenta, Kobe-shi, Hyogo 650-8670 (JP)
(74) Representative: Arnold & Siedsma
(86) International application number: PCT/JP2024/041708
(87) International publication number: WO 2025/115825

(57) **Abstract**

Provided is a double-walled pipe (1) including: an inner pipe (3) through which the low-temperature fluid passes; and an outer pipe (5) that covers an outer side of the inner pipe and defines a heat insulation layer (7) between the outer pipe and the inner pipe, wherein the double-walled pipe includes a thrust support structure (9) between the inner pipe (3) and the outer pipe (5). The thrust support structure includes: a first bearing member (11) that is fixed to an outer peripheral surface (3a) of the inner pipe (3) and has a first bearing surface (11a) facing a first direction (D1) along an axis (C) of the double-walled pipe (1); a second bearing member (13) that is fixed to an inner peripheral surface (5a) of the outer pipe (5) and has a second bearing surface (13a) facing a second direction (D2) opposite to the first direction (D1); and a first intermediate bearing member (15) that includes a heat insulation material and is disposed between the first bearing surface (11a) of the first bearing member (11) and the second bearing surface (13a) of the second bearing member (13).

## Description

### CROSS REFERENCE TO THE RELATED APPLICATION

The present application claims priority to Japanese Patent Application No. 2023-203306 filed on November 30, 2023, and the entire disclosure of which is herein incorporated by reference as a part of the present application.

### FIELD OF THE INVENTION

The present disclosure relates to a double-walled pipe used for transfer of a low-temperature fluid.

### BACKGROUND ART

Patent Document 1 proposes use of a double-structure vacuum heat insulation pipe as a pipe for transferring a low-temperature fluid such as, for example, liquefied gas. In a double-walled pipe, a thrust is generated in an inner pipe through which a low-temperature fluid passes, due to pressure applied from a fluid inside the inner pipe. Conventionally, as one structure for suppressing movement of the inner pipe due to such a thrust, a rod-shaped support member may be installed so as to extend between the outer pipe and the inner pipe to restrict axial movement of the inner pipe relative to the outer pipe.

### RELATED DOCUMENT

### PATENT DOCUMENT

[Patent Document 1] Japanese Utility Model Publication No. 59-115192

### SUMMARY OF THE INVENTION

### PROBLEMS TO BE SOLVED BY THE INVENTION

Conventionally, in order to firmly fix a rod-shaped support member to an inner pipe and an outer pipe, the same metallic material as that of the pipes has been used for the rod-shaped support member. In that case, heat from low-temperature liquefied gas passing through the inner pipe is transferred to the outer pipe via the metallic support member. Therefore, in order to suppress heat transfer to the outer pipe, the support member needs to have a certain length to secure a heat transfer distance. As a result, a large installation space is required, which in turn affects pipe layout. In addition, since the rod-shaped support member is, for example, welded so as to be extended from the inner peripheral surface of the outer pipe to the outer peripheral surface of the inner pipe, it is necessary to perform welding in a state where the outer pipe and the inner pipe have been assembled, and thus, the attachment work is complicated.

An object of the present disclosure is, in order to solve the above issues, to downsize the thrust support structure used in a pipe for transferring a low-temperature fluid having a double-walled structure and to facilitate the attachment work of the thrust support structure.

### MEANS FOR SOLVING THE PROBLEMS

To solve the above-described issues, a double-walled pipe for transferring a low-temperature fluid according to the present disclosure is: a double-walled pipe including:
an inner pipe through which the low-temperature fluid passes; and
an outer pipe that covers an outer side of the inner pipe and defines a heat insulation layer between the outer pipe and the inner pipe, wherein
the double-walled pipe includes a thrust support structure between the inner pipe and the outer pipe, and
the thrust support structure includes:
   a first bearing member that is fixed to an outer peripheral surface of the inner pipe and has a first bearing surface facing a first direction along an axis of the double-walled pipe;
   a second bearing member that is fixed to an inner peripheral surface of the outer pipe and has a second bearing surface facing a second direction opposite to the first direction; and
   a first intermediate bearing member that includes a heat insulation material and is disposed between the first bearing surface of the first bearing member and the second bearing surface of the second bearing member.

According to the double-walled pipe for transferring a low-temperature fluid according to the present disclosure, the thrust support structure including the first bearing member, the second bearing member, and the first intermediate bearing member can be downsized relative to the conventional structure, and the attachment work of the thrust support structure can be facilitated.

Note that any combination of at least two components disclosed in the appended claims and/or the description and/or the drawings is included in the present disclosure. In particular, any combination of two or more of the claims set forth in the appended claims is included in the present disclosure.

### BRIEF DESCRIPTION OF THE DRAWINGS

The present disclosure will become more clearly understood from the following description of preferred embodiments thereof, when taken in conjunction with the accompanying drawings. However, the embodiments and the drawings are provided solely for the purpose of illustration and description, and are not intended to define the scope of the present disclosure. The scope of the present disclosure is to be determined by the appended claims. In the accompanying drawings, like reference numerals are used to denote like parts throughout the several drawings.
[Fig. 1] Fig. 1 is a longitudinal cross-sectional view schematically illustrating a schematic configuration of a double-walled pipe for transferring a low-temperature fluid according to one embodiment of the present disclosure.
[Fig. 2] Fig. 2 is a cross-sectional view taken along line II-II, schematically illustrating a schematic configuration of the double-walled pipe for transferring a low-temperature fluid of Fig. 1.
[Fig. 3] Fig. 3 is a longitudinal cross-sectional view schematically illustrating a schematic configuration of a double-walled pipe for transferring a low-temperature fluid according to another embodiment of the present disclosure.
[Fig. 4] Fig. 4 is a longitudinal cross-sectional view schematically illustrating a modified example of the embodiment of Fig. 3.

### DESCRIPTION OF EMBODIMENTS

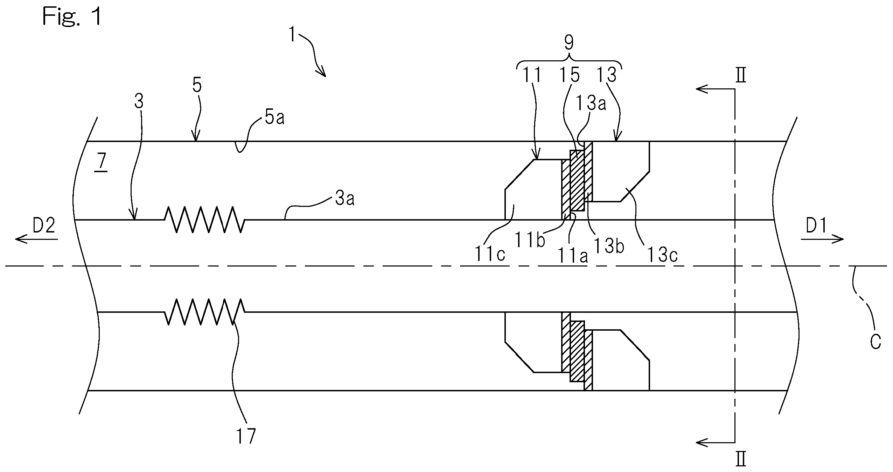

Embodiments of the present disclosure will be described below with reference to the drawings. Fig. 1 illustrates a double-walled pipe 1 for transferring a low-temperature fluid according to one embodiment of the present disclosure. In the following description, the pipe 1 for transferring a low-temperature fluid will be simply referred to as a double-walled pipe 1. The double-walled pipe 1 of the present embodiment is configured as a vacuum heat insulation pipe having a double-walled structure. Specifically, the double-walled pipe 1 includes an inner pipe 3 through which a low-temperature fluid passes and an outer pipe 5 that covers the outer side of the inner pipe 3. The inner pipe 3 and the outer pipe 5 of the double-walled pipe 1 are arranged concentrically, that is, so as to have a common axis C. A vacuum heat insulation layer 7 is defined in a radial gap between the inner pipe 3 and the outer pipe 5. However, the double-walled pipe 1 is not limited to a vacuum heat insulation pipe, and the heat insulation layer may be formed by providing, for example, a heat insulation material in a space between the inner pipe 3 and the outer pipe 5. In the present description, an axial direction, a radial direction, and a circumferential direction of the double-walled pipe 1 are hereinafter simply referred to as an "axial direction", a "radial direction", and a "circumferential direction", respectively. The inner pipe 3 and the outer pipe 5 are formed from, for example, a metallic material such as stainless steel. However, materials of the inner pipe 3 and the outer pipe 5 are not limited to stainless steel.

The double-walled pipe 1 is used, for example, in a liquefied gas storage facility such as a liquefied gas storage vessel or an onshore liquefied gas storage base. In the present description, the term "liquefied gas storage vessel" refers to a vessel having a function of storing liquefied gas. In addition to liquefied gas carriers, the term "liquefied gas storage vessel" includes, for example, liquefied-gas-fueled vessels and bunkering vessels that supply liquefied gas to other vessels. However, the liquefied gas storage facility is not limited to a vessel as long as the liquefied gas storage facility has a structure and a function for storing liquefied gas, and may be, for example, an onshore liquefied gas storage facility or a plant that uses liquefied gas.

A low-temperature fluid transferred by the double-walled pipe 1 is, for example, liquefied gas such as ammonia (LNH₃, about -30°C), liquefied petroleum gas (LPG, about - 45°C), liquefied carbon dioxide (LCO₂, about -80°C), liquefied ethylene gas (LEG, about - 100°C), liquefied natural gas (LNG, about -160°C), liquefied nitrogen (LN₂, about -200°C), liquefied hydrogen (LH₂, about -250°C), liquefied helium (LHe, about -270°C), or the like. In the present embodiment, liquefied hydrogen is transferred through the double-walled pipe 1. In addition, a low-temperature fluid in the present description includes not only liquefied gas but also low-temperature vaporized gas generated from liquefied gas. The double-walled pipe 1 of the present disclosure is applicable not only to a facility for transferring liquefied gas but also to a facility for transferring low-temperature vaporized gas.

A thrust in the axial direction acts on the inner pipe 3 through which such a low-temperature fluid passes, due to pressure applied from fluid inside the inner pipe 3.

Accordingly, the double-walled pipe 1 of the present embodiment includes a thrust support structure 9 that supports a thrust acting on the inner pipe 3 in the axial direction. The thrust support structure 9 includes a first bearing member 11, a second bearing member 13, and a first intermediate bearing member 15 disposed between the first bearing member 11 and the second bearing member 13. The thrust support structure 9 supports a thrust acting in one direction along the axis C of the double-walled pipe 1. In the present embodiment, the thrust support structure 9 supports the thrust acting in a first direction D1 along the axis C of the double-walled pipe 1.

Specifically, in the present embodiment, the first bearing member 11 is fixed to an outer peripheral surface 3a of the inner pipe 3, as illustrated in Fig. 1. The first bearing member 11 has a first bearing surface 11a facing the first direction D1 along the axis C of the double-walled pipe 1. The second bearing member 13 is fixed to an inner peripheral surface 5a of the outer pipe 5 and has a second bearing surface 13a facing a second direction D2 opposite to the first direction D1. The first bearing member 11 and the second bearing member 13 are attached to the outer peripheral surface 3a of the inner pipe 3 and the inner peripheral surface 5a of the outer pipe 5, respectively, by welding, for example. Materials of the first bearing member 11 and the second bearing member 13 are the same materials as the double-walled pipe 1 in order to be firmly fixed to the inner pipe 3 and the outer pipe 5. However, attachment methods and materials of the first bearing member 11 and the second bearing member 13 are not limited to the above examples.

In the present embodiment, the first bearing member 11 includes a first plate portion 11b and a first rib 11c that supports the first plate portion 11b. The first plate portion 11b extends in the radial direction from the outer peripheral surface 3a of the inner pipe 3 and has the first bearing surface 11a. The first rib 11c is provided on a surface of the first plate portion 11b opposite to the first bearing surface 11a. Similarly, the second bearing member 13 includes a second plate portion 13b and a second rib 13c that supports the second plate portion 13b. The second plate portion 13b extends in the radial direction from the inner peripheral surface 5a of the outer pipe 5 and has the second bearing surface 13a. The second rib 13c is provided on a surface of the second plate portion 13b opposite to the second bearing surface 13a. The plate portions 11b and 13b and the ribs 11c and 13c of the bearing members 11 and 13 may be formed as integral parts, or may be parts formed separately and joined by welding, for example. In addition, a cross-sectional shape of each of the bearing members 11 and 13 along the axis C of the double-walled pipe 1 is not limited to the illustrated trapezoidal shape, and may be any shape such as a triangle or a quadrilateral.

The first bearing member 11 and the second bearing member 13 each face a pipe surface opposite to the pipe to which the member is fixed, via a radial gap. Specifically, the first bearing member 11 fixed to the inner pipe 3 faces the inner peripheral surface 5a of the outer pipe 5 via a radial gap, and the second bearing member 13 fixed to the outer pipe 5 faces the outer peripheral surface 3a of the inner pipe 3 via a radial gap. This configuration is employed because, if these bearing members 11 and 13 were in contact with the pipe surfaces on the opposite side, cold energy would be transferred from the inner pipe 3 to the outer pipe 5. The radial gaps prevent contact between the inner pipe 3 and the outer pipe 5 to the bearing members 13 and 11, which are formed from metal, and thus prevents deterioration of heat-insulation performance.

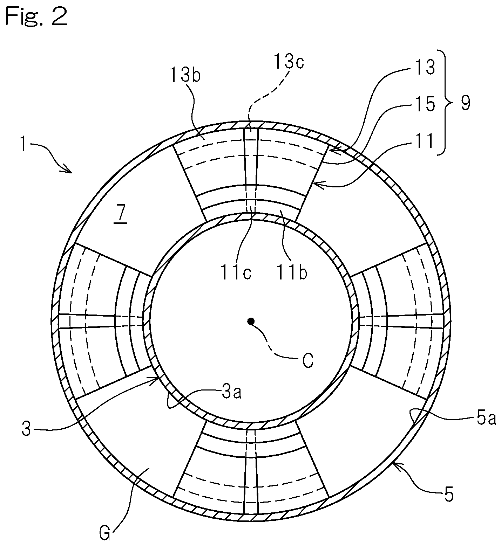

The first intermediate bearing member 15 is disposed between the first bearing surface 11a of the first bearing member 11 and the second bearing surface 13a of the second bearing member 13. In the present embodiment, as illustrated in Fig. 2, the first bearing member 11 and the second bearing member 13 overlap in the radial direction when viewed in the axial direction. Specifically, the first plate portion 11b of the first bearing member 11 and the second plate portion 13b of the second bearing member 13 overlap in the radial direction when viewed in the axial direction. The first intermediate bearing member 15 is disposed in a portion where the bearing members 11 and 13 radially overlap. By arranging the first bearing member 11 and the second bearing member 13 so as to have such a radially overlapping portion, the first intermediate bearing member 15 can be disposed in the radially overlapping portion so that the thrust acting on the inner pipe 3 can be reliably supported.

The first intermediate bearing member 15 includes a heat insulation material. The first intermediate bearing member 15 is preferably a heat insulation material including, for example, glass fiber reinforced resin (GFRP). However, the heat insulation material constituting the first intermediate bearing member 15 is not limited to this example, and may be a high-strength heat insulation material that does not release gas under vacuum, and for example, polyether ether ketone (PEEK) can be used in addition to GFRP. The first intermediate bearing member 15 is attached to one of the first bearing member 11 and the second bearing member 13. The first intermediate bearing member 15 can be attached by any method, and for example, the first intermediate bearing member 15 can be fixed using bolts.

In the present embodiment, the first intermediate bearing member 15 is formed in a plate shape extending in the circumferential direction. In the present embodiment, the first intermediate bearing member 15 has a rectangular cross section as illustrated in the longitudinal cross-sectional view of Fig. 1 and does not contact either the inner pipe 3 or the outer pipe 5. However, the first intermediate bearing member 15 may contact one or both of the inner pipe 3 and the outer pipe 5. In this case, the first intermediate bearing member 15 can be provided with a function as a spacer that maintains a distance between the inner pipe 3 and the outer pipe 5. In addition, the first intermediate bearing member 15 may have any shape as long as the first intermediate bearing member 15 can receive a thrust between the first bearing surface 11a of the first bearing member and the second bearing surface 13a of the second bearing member 13.

A circumferential range in which the bearing members 11, 13, and 15 constituting the thrust support structure 9 are provided may be appropriately set in accordance with the thrust acting on the inner pipe 3. In the present embodiment, as illustrated in Fig. 2, the bearing members 11, 13, and 15 are provided at a plurality of locations in the circumferential direction, and at four locations at equal intervals in the circumferential direction in this example. However, the number of locations, circumferential intervals, and shapes of the bearing members 11, 13, and 15 can be arbitrarily determined and are not limited to the illustrated example. For example, in the present embodiment, the bearing members 11, 13, and 15 each have a fan shape when viewed in the axial direction as illustrated in Fig. 2. However, each bearing member 11, 13, and 15 may have a shape in which one side of a quadrilateral is curved along a pipe surface. In the present embodiment, the first plate portions 11b of the first bearing members 11 and the second plate portions 13b of the second bearing members 13 extend over a part of the inner pipe 3 and the outer pipe 5 in the circumferential direction, respectively. The first intermediate bearing member 15 extends over the same circumferential range as each of the first plate portions 11b and the second plate portions 13b. In addition, in the present embodiment, the first and second plate portions 11b and 13b are supported by single ribs 11c and 13c, respectively. However, a plurality of ribs may be provided for each of the plate portions 11b and 13b. The intervals at which the ribs 11c and 13c are provided can be appropriately determined, for example, in accordance with required strength. It is not necessary to align the radial positions of the first rib 11c and the second rib 13c that support the first plate portion 11b and the second plate portion 13b, respectively.

By setting the circumferential range in which the bearing members 11, 13, and 15 constituting the thrust support structure 9 are disposed to a part of the circumference in this manner, the thrust support structure 9 can be installed at an appropriate position in accordance with the thrust acting on the inner pipe 3. This reduces the amount of required material, leading to cost reduction, and can increase the degree of freedom in the pipe layout.

However, the circumferential range in which the bearing members 11, 13, and 15 constituting the thrust support structure 9 are provided is not limited to this example. For example, the bearing members 11, 13, and 15 may have a ring shape. According to this configuration, the thrust can be received in a distributed manner over a large area, and a larger thrust can be supported. Furthermore, the circumferential ranges in which the bearing members 11, 13, and 15 are provided do not need to completely coincide with each other.

According to the double-walled pipe 1 of the present embodiment, the thrust support structure 9 supports the thrust acting on the inner pipe 3 in the first direction D1. Since the thrust support structure 9 includes the first bearing members 11, the second bearing members 13, and the first intermediate bearing members 15 including a heat insulation material, the thrust support structure can be downsized compared to the conventional structure using a long metallic support member to secure a heat transfer distance. Furthermore, compared to the conventional structure in which a support member is welded so as to extend between the inner pipe and the outer pipe, the first bearing member 11 and the second bearing member 13 are separately attached to the double-walled pipe 1, and the first intermediate bearing member 15 is fixed to one of the bearing members, whereby the attachment work of the thrust support structure can be facilitated.

In the present embodiment, as illustrated in Fig. 1, the inner pipe 3 includes an expandable and contractible portion 17 that absorbs a change in a length of the inner pipe 3 in the axial direction. In the present embodiment, the inner pipe 3 has a bellows as the expandable and contractible portion 17. The expandable and contractible portion 17 may be configured to allow, for example, radial displacement in addition to a change in the length of the inner pipe 3 in the axial direction. According to this configuration, thermal contraction of the inner pipe 3 can be absorbed.

In the present embodiment, as illustrated in Fig. 2, the thrust support structure 9, which includes the first bearing members 11, the second bearing members 13, and the first intermediate bearing members 15, has a communication gap G that allows the vacuum heat insulation layer 7 to communicate through the thrust support structure 9. A specific form of the communication gap G is not particularly limited. For example, when the first plate portion 11b, the second plate portion 13b, and the first intermediate bearing member 15 exist only in a part of the circumference as in the present embodiment, the communication gap G is formed by a portion where the first plate portion 11b, the second plate portion 13b, and the first intermediate bearing member 15 do not exist in the circumferential direction. As another exemplary form of the communication gap G, when the first plate portion 11b, the second plate portion 13b, and the first intermediate bearing member 15 extend over an entire circumference and the first intermediate bearing member 15 contacts the inner pipe 3 and the outer pipe 5, the communication gap G can be provided as a hole penetrating these members. When the first intermediate bearing member 15 contacts only one of the inner pipe 3 and the outer pipe 5, or when the first intermediate bearing member 15 contacts neither the inner pipe 3 nor the outer pipe 5, a hole serving as the communication gap G can be provided in the plate portion on a side where the first intermediate bearing member 15 does not contact the inner pipe 3 and/or the outer pipe 5. With the communication gap G, when the heat insulation layer 7 is a vacuum heat insulation layer, evacuation of the vacuum heat insulation layer 7 on both sides of the thrust support structure can be performed simultaneously using a common vacuum pump, and vacuum management is also simplified. However, providing the communication gap G is not essential.

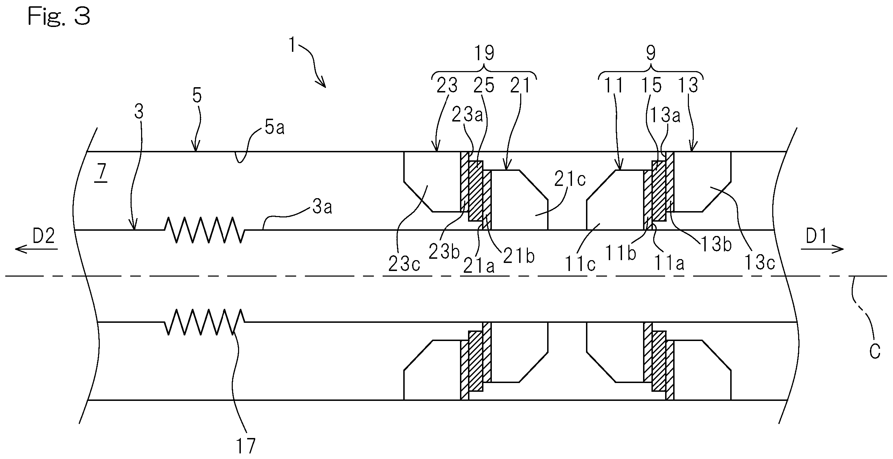

In one modified example of the present embodiment, as illustrated in Fig. 3, the double-walled pipe 1 includes a second thrust support structure 19. The second thrust support structure 19 includes a third bearing member 21, a fourth bearing member 23, and a second intermediate bearing member 25 disposed between the third bearing member 21 and the fourth bearing member 23. Similarly to the thrust support structure 9, the second thrust support structure 19 supports a thrust acting in one direction along the axis C of the double-walled pipe 1. In the present embodiment, the second thrust support structure 19 supports a thrust acting in the second direction D2 along the axis C of the double-walled pipe 1. By providing the thrust support structures 9 and 19, thrusts acting in both directions D1 and D2 along the axis C of the double-walled pipe 1 can be supported.

Specifically, in the modified example illustrated in Fig. 3, the third bearing member 21 is fixed to the outer peripheral surface 3a of the inner pipe 3 and has a third bearing surface 21a facing the second direction D2. The fourth bearing member 23 is fixed to the inner peripheral surface 5a of the outer pipe 5 and has a fourth bearing surface 23a facing the first direction D1. Attachment methods and materials of the third bearing member 21 and the fourth bearing member 23 are the same as those of the first bearing member 11 and the second bearing member 13. Therefore, description thereof is omitted.

The second intermediate bearing member 25 is disposed between the third bearing surface 21a of the third bearing member 21 and the fourth bearing surface 23a of the fourth bearing member 23, and includes a heat insulation material. Attachment methods, materials, and shape of the second intermediate bearing member 25 are the same as those of the first intermediate bearing member 15. Therefore, description thereof is omitted.

By providing the thrust support structures 9 and 19, a thrust such as a seismic force acting in the second direction D2 can also be supported by the thrust support structure 19, in addition to supporting a thrust acting on the double-walled pipe 1 in the first direction D1 by the thrust support structure 9.

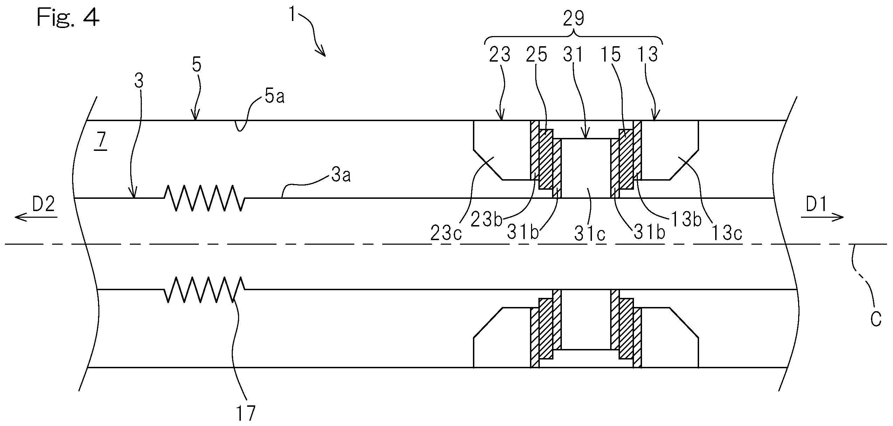

In a further modified example of the present embodiment, as illustrated in Fig. 4, the double-walled pipe 1 is provided with a thrust support structure 29. Briefly, the thrust support structure 29 is a structure in which the first bearing member 11 and the third bearing member 21 of the thrust support structures 9 and 19 described above are integrated. Specifically, the thrust support structure 29 includes the second bearing member 13, the first intermediate bearing member 15, a common intermediate bearing member 31, the second intermediate bearing member 25, and the fourth bearing member 23. The second bearing member 13 and the fourth bearing member 23 are fixed to the inner peripheral surface 5a of the outer pipe 5, and the common intermediate bearing member 31 is fixed to the outer peripheral surface 3a of the inner pipe 3. The first intermediate bearing member 15 is disposed between the second bearing member 13 and the common intermediate bearing member 31, and the second intermediate bearing member 25 is disposed between the common intermediate bearing member 31 and the fourth bearing member 23. Also in this case, thrusts acting in both directions along the axis C of the double-walled pipe 1 can be supported. Furthermore, since the number of components is smaller than in the modified example illustrated in Fig. 3, the burden of the attachment work of the thrust support structure is reduced.

In the illustrated example, the common intermediate bearing member 31 is fixed to the outer peripheral surface 3a of the inner pipe 3. However, the common intermediate bearing member 31 may be fixed to the inner peripheral surface 5a of the outer pipe 5, and the bearing members on both sides may be fixed to the outer peripheral surface 3a of the inner pipe 3. The common intermediate bearing member 31 may extend over an entire circumference or a part of the circumference of the outer peripheral surface 3a of the inner pipe 3 or the inner peripheral surface 5a of the outer pipe 5.

In Fig. 4, the common intermediate bearing member 31 is a member including common intermediate plate portions 31b and 31b on both sides and a common intermediate rib 31c provided between the common intermediate plate portions 31b and 31b. However, the common intermediate bearing member 31 is not limited to the illustrated example. The common intermediate plate portions 31b and 31b and the common intermediate rib 31c may be, for example, integrally formed, or the common intermediate bearing member 31 may be a ring-shaped member having a rectangular cross section. Also in this modified example, the communication gap G can be appropriately provided as a circumferential gap or a through hole in accordance with the circumferential ranges and shapes of the second plate portion 13b and a fourth plate portion 23b, and the common intermediate bearing member 31.

In the modified example illustrated in Fig. 4, the common intermediate bearing member 31 is fixed by, for example, welding similarly to the first bearing member 11 and the third bearing member 21, and is formed from the same material as the double-walled pipe 1. Although not illustrated, instead of forming the common intermediate bearing member 31 from the common intermediate plate portions 31b and 31b and the common intermediate rib 31c, the common intermediate bearing member 31 may be a ring-shaped member having a rectangular cross section, the ring-shaped member including a base portion fixed to the outer peripheral surface 3a of the inner pipe 3 and a heat insulation material fixed to an outer-pipe-side portion of the base portion, and the heat insulation material of the ring-shaped member may be sandwiched between the first intermediate bearing member 15 and the second intermediate bearing member 25. In this case, since the number of metal members included in the thrust support structure is reduced, it is possible to further suppress the transfer of cold energy and improve the heat-insulation performance of the double-walled pipe 1. In addition, by setting a dimension of the heat insulation material on the inner-pipe side so as to contact the inner peripheral surface of the outer pipe 5 as necessary, radial movement of the inner pipe 3 can also be restricted.

Although detailed description is omitted, the double-walled pipe 1 according to the present embodiment may further include structural elements other than the illustrated elements, such as a spacer that restricts relative radial movement between the inner pipe 3 and the outer pipe 5, an expandable and contractible portion provided in the outer pipe, and the like, as necessary.

A double-walled pipe 1 according to a first aspect of the present embodiment described above is, as illustrated in Fig. 1, a double-walled pipe 1 including an inner pipe 3 through which a low-temperature fluid passes and an outer pipe 5 that covers an outer side of the inner pipe 3 and defines a heat insulation layer 7 between the outer pipe 5 and the inner pipe 3, wherein the double-walled pipe 1 includes a thrust support structure 9 between the inner pipe 3 and the outer pipe 5, and the thrust support structure 9 includes a first bearing member 11 that is fixed to an outer peripheral surface 3a of the inner pipe 3 and that has a first bearing surface 11a facing a first direction D1 along an axis C of the double-walled pipe 1; a second bearing member 13 that is fixed to an inner peripheral surface 5a of the outer pipe 5 and has a second bearing surface 13a facing a second direction D2 opposite to the first direction D1; and a first intermediate bearing member 15 that includes a heat insulation material and is disposed between the first bearing surface 11a of the first bearing member 11 and the second bearing surface 13a of the second bearing member 13. According to this configuration, the thrust support structure 9 including the first bearing member 11, the second bearing member 13, and the first intermediate bearing member 15 can be downsized relative to the conventional structure, and the attachment work of the thrust support structure 9 can be facilitated.

A double-walled pipe 1 according to a second aspect of the present embodiment may be the double-walled pipe according to the first aspect, wherein the inner pipe 3 includes an expandable and contractible portion 17 that absorbs a change in a length of the inner pipe 3 in an axial direction. According to this configuration, thermal contraction of the inner pipe 3 can be absorbed.

A double-walled pipe 1 according to a third aspect of the present embodiment may be the double-walled pipe according to the first aspect or the second aspect, wherein the thrust support structure 19 illustrated in Fig. 3 includes: a third bearing member 21 that is fixed to the outer peripheral surface 3a of the inner pipe 3 and that has a third bearing surface 21a facing the second direction D2; a fourth bearing member 23 that is fixed to the inner peripheral surface 5a of the outer pipe 5 and that has a fourth bearing surface 23a facing the first direction D1; and a second intermediate bearing member 25 that includes a heat insulation material and is disposed between the third bearing surface 21a of the third bearing member 21 and the fourth bearing surface 23a of the fourth bearing member 23. According to this configuration, a thrust such as a seismic force acting in the second direction D2 can also be supported by the thrust support structure 19 in addition to supporting a thrust acting on the double-walled pipe 1 in the first direction D1 by the thrust support structure 9.

A double-walled pipe 1 according to a fourth aspect of the present embodiment may be the double-walled pipe according to the third aspect, wherein the first bearing member 11 of the thrust support structure 9 and the third bearing member 21 are integrally formed to constitute the common intermediate bearing member 31. According to this configuration, since the number of components is small, the burden of the attachment work of the thrust support structure is reduced.

A double-walled pipe 1 according to a fifth aspect of the present embodiment may be the double-walled pipe according to any one of the first aspect to the fourth aspect, wherein, the first bearing member 11 and the second bearing member 13 overlap in the radial direction when viewed in the axial direction, as illustrated in Fig. 2. According to this configuration, the first bearing member 11 and the second bearing member 13 are arranged to have such a radially overlapping portion, the first intermediate bearing member 15 can be disposed in the radially overlapping portion, so that the thrust acting on the inner pipe 3 can be reliably supported.

A double-walled pipe 1 according to a sixth aspect of the present embodiment may be the double-walled pipe according to any one of the first aspect to the fifth aspect, wherein the thrust support structure 9 including the first bearing member 11, the second bearing member 13, and the first intermediate bearing member 15 has a communication gap G that allows the heat insulation layer 7 to communicate through the thrust support structure 9. According to this configuration, when the heat insulation layer 7 is a vacuum heat insulation layer, evacuation of the vacuum heat insulation layer 7 on both sides of the thrust support structure can be performed simultaneously using a common vacuum pump, and vacuum management is also simplified.

Preferred embodiments of the present disclosure have been described above with reference to the drawings. However, various additions, modifications, or deletions can be made within a range not departing from the spirit of the present disclosure. Accordingly, such variations are also included in the scope of the present disclosure.

## Claims

1. A double-walled pipe for transferring a low-temperature fluid, the double-walled pipe comprising:
an inner pipe through which the low-temperature fluid passes; and
an outer pipe that covers an outer side of the inner pipe and defines a heat insulation layer between the outer pipe and the inner pipe, wherein
the double-walled pipe comprises a thrust support structure between the inner pipe and the outer pipe, and
the thrust support structure includes:
a first bearing member that is fixed to an outer peripheral surface of the inner pipe and that has a first bearing surface facing a first direction along an axis of the double-walled pipe;
a second bearing member that is fixed to an inner peripheral surface of the outer pipe and has a second bearing surface facing a second direction opposite to the first direction; and
a first intermediate bearing member that includes a heat insulation material and is disposed between the first bearing surface of the first bearing member and the second bearing surface of the second bearing member.

2. The double-walled pipe according to claim 1, wherein
the inner pipe includes an expandable and contractible portion that absorbs a change in a length of the inner pipe in an axial direction.

3. The double-walled pipe according to claim 1 or 2, wherein
the thrust support structure includes:
a third bearing member that is fixed to the outer peripheral surface of the inner pipe and has a third bearing surface facing the second direction;
a fourth bearing member that is fixed to the inner peripheral surface of the outer pipe and has a fourth bearing surface facing the first direction; and
a second intermediate bearing member that includes a heat insulation material and is disposed between the third bearing surface of the third bearing member and the fourth bearing surface of the fourth bearing member.

4. The double-walled pipe according to claim 3, wherein
the first bearing member and the third bearing member of the thrust support structure are integrally formed to constitute a common intermediate bearing member.

5. The double-walled pipe according to claim 1 or 2, wherein
the first bearing member and the second bearing member overlap in a radial direction when viewed in an axial direction.

6. The double-walled pipe according to claim 1 or 2, wherein
the thrust support structure has a communication gap that allows the heat insulation layer to communicate through the thrust support structure.
